(19) Europäisches Patentamt
European Patent Office
Office européen des brevets

(11) **EP 1 113 432 B1**

(12) **EUROPEAN PATENT SPECIFICATION**

(45) Date of publication and mention
of the grant of the patent:
**30.03.2011 Bulletin 2011/13**

(51) Int Cl.:
*G11B 20/00* [(2006.01)]     *G10L 17/00* [(2006.01)]
*H04B 1/66* [(2006.01)]

(21) Application number: **00124617.2**

(22) Date of filing: **10.11.2000**

(54) **Method and system for detecting identical digital data**

Verfahren und System zur Erkennung von identischen digitalen Daten

Procédé et dispositif de détection de données numériques identiques

(84) Designated Contracting States:
**AT BE CH CY DE DK ES FI FR GB GR IE IT LI LU MC NL PT SE TR**

(30) Priority: **24.12.1999 EP 99125884**

(43) Date of publication of application:
**04.07.2001 Bulletin 2001/27**

(73) Proprietor: **International Business Machines Corporation
Armonk, NY 10504 (US)**

(72) Inventors:
• **Fischer, Uwe
71088 Holzgerlingen (DE)**
• **Hoffmann, Stefan
71093 Weil im Schoenbuch (DE)**

• **Kriechbaum, Werner, Dr.
72119 Ammerbuch-Breitenholz (DE)**
• **Stenzel, Gerhard
71083 Herrenberg (DE)**

(74) Representative: **Kauffmann, Wolfgang Christian et al
IBM Deutschland Management & Business Support GmbH
Patentwesen u. Urheberrecht
71137 Ehningen (DE)**

(56) References cited:
EP-A- 0 482 699      WO-A-99/34527
US-A- 5 369 724      US-A- 5 625 743
US-A- 5 638 486      US-A- 5 918 223

**Description**

Field of the Invention

The invention relates generally to treating of digital data. More particularly the invention relates to a method and system for generating a characteristic identifier for digital data and to a method and system for detection of identical digital data.

Background of the invention

In recent years an increasing amount of audio data is recorded, processed, distributed, and archived on digital media using numerous encoding and compression formats like e.g. WAVE, AIFF, MPEG, RealAudio etc. Transcoding or resampling techniques that are used to switch from one encoding format to another almost never produce a recording that is identical to a direct recording in the target format. A similar effect occurs with most compression schemes: Changes in the compression factor or other parameters result in a new encoding and a bitstream that bears little similarity to the original bitstream. Both effects make it rather difficult to establish the identity of one audio recording stored in two different formats. Establishing the possible identity of different audio recordings is a pressing need in audio production, archiving and copyright protection.

During the production of a digital audio recording usually numerous different versions in various encoding formats come into existence as intermediate steps and are distributed over a variety of different computer systems. In most cases these recordings are not cross-referenced and often it has to be established by listening to the recordings whether two versions are identical or not. An automatic procedure will greatly ease this task.

A similar problem exists in audio archives that have to deal with material that has been issued in a variety of compilations (like e.g. Jazz or popular songs) or on a variety of carriers (like e.g. the famous recordings of Toscanini with the NBC Symphony orchestra). Often the archiv number of the original master of such a recording is not documented and in most cases it can only be decided by listening to the audio recordings whether a track from a compilation is identical to a recording of the same piece on another sound carrier.

Copyright protection is a key issue for the audio industry. And it becomes even more relevant with the invention of new technology that makes creation and distribution of copies of audio recordings a simple task. While mechanisms to avoid unauthorized copies solve one side of the problem, it is also required to establish processes to detect unauthorized copies.

In US 5,918,223 a method of generating a feature vector for audio data is described, wherein acoustical features of the data are taken into account, like loudness, bass, pitch, and brightness. The feature vector can be used to classify and rank the similarity between individual audio files typically stored in a multimedia database or on the World Wide Web.

EP 0 482 669 A2 describes a method of coding and decoding a sampled analog signal and addresses the problem of transmitting speech from a transmitter to a receiver without quality losses. To solve this problem, it is suggested to filter the analog signal using a short-term prediction filter, to transform the residual signal to the frequency domain, to combine the amplitudes of selected frequency components, and to transmit a signal which is representative of said combined amplitudes, wherein the frequency components used for the combining step are selected in view of their equidistance on a linear Bark scale.

Object of the invention

It is therefore an object of the present invention to provide a method and system for detection of identical digital data.

Summary of the invention

This and other objects of the invention are achieved by a method and system according to the independent claims.

According to the present invention a characteristic identifier for digital data is generated. Thereby the information contained in the data is reduced such that the resulting identifier is made comparable to one another. Identifiers generated according to the present invention are resistant against the artifacts which are introduced into digital data by all common compression techniques. Using such identifiers therefore allows the identification of identical digital data independent of the chosen representation and compression methods.

Furthermore the generated identifiers are used for detecting identical digital data. Thereby it is decided whether the digital data are identical depending on the distance between the identifiers belonging to them. A faster, cheaper and more reliable process of detection of identical digital data can be established.

In a preferred embodiment of the present invention the digital data is a digital audio signal and the characteristic identifier is called audio signature. The comparing of identical audio data according to the invention can be carried out without a person actually listening to the audio data.

The present invention can be used to establish automated processes to find potential unauthorized copies of audio data, e.g. music recordings, and therefore enables a better enforcement of copyrights in the audio industry.

Brief description of the drawings

Fig.1    is a flow diagram describing the generation of an audio signature according to an embodiment of the present invention,

Fig.2    is a flow diagram describing a series expansion according to an embodiment of the present invention,

Fig.3    is a flow diagram describing the generation of an energy spectrum according to an embodiment of the present invention,

Fig.4    shows an energy spectrum according to an embodiment of the present invention,

Fig.5    shows an energy spectrum with selected peaks marked according to an embodiment of the present invention,

Fig.6    shows a peak array according to an embodiment of the present invention,

Fig.7    shows a flow diagram describing the generation of an interval array according to an embodiment of the present invention,

Fig.8    shows an interval array according to an embodiment of the present invention,

Fig.9    is a flow diagram describing the computation of a quantized interval array according to an embodiment of the present invention,

Fig.10    shows a quantized interval array according to an embodiment of the present invention,

Fig.11    is a flow diagram describing the peak folding according to an embodiment of the present invention,

Fig.12    shows a signature vector according to an embodiment of the present invention,

Fig.13    is a flow diagram describing the computation of a distance between two audio signatures according to an embodiment of the present invention,

Fig.14    shows a signature generator and a signature analyzer according to an embodiment of the present invention,

Fig.15    shows a system for comparing audio files against a set of reference audio files according to an embodiment of the present invention.

Detailed description of the invention

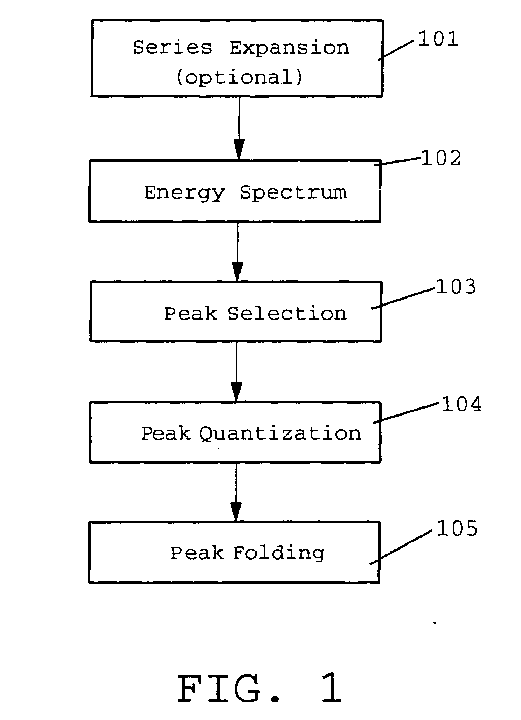

In Fig.1 a flow diagram decribing the method of generation of an audio signature according to an embodiment of the present invention is shown.

In a preferred embodiment of the invention a single channel digital audio signal 100 in WAVE data format is used. The terms 'monophonic' audio or 'mono' audio are used to describe such single channel audio data. If the audio signal 100 is available in another input format it has to be converted into the mono WAVE format in a previous step. However, the present invention can be adapted for any arbitrary input formats, e.g. mono AIFF etc.

To operate on monophonic files is no restriction but just a matter of convenience. For multi-track recordings, like sterophonic or multi-track studio masters, the described method can easily be used to compute an audio signature for each individual channel. If an audio signature for the multi-track recording is needed or desired, the audio signatures for individual channels are preferably combined into a signature vector wherein each element $i$ of the vector corresponds to the signature of track *i.*

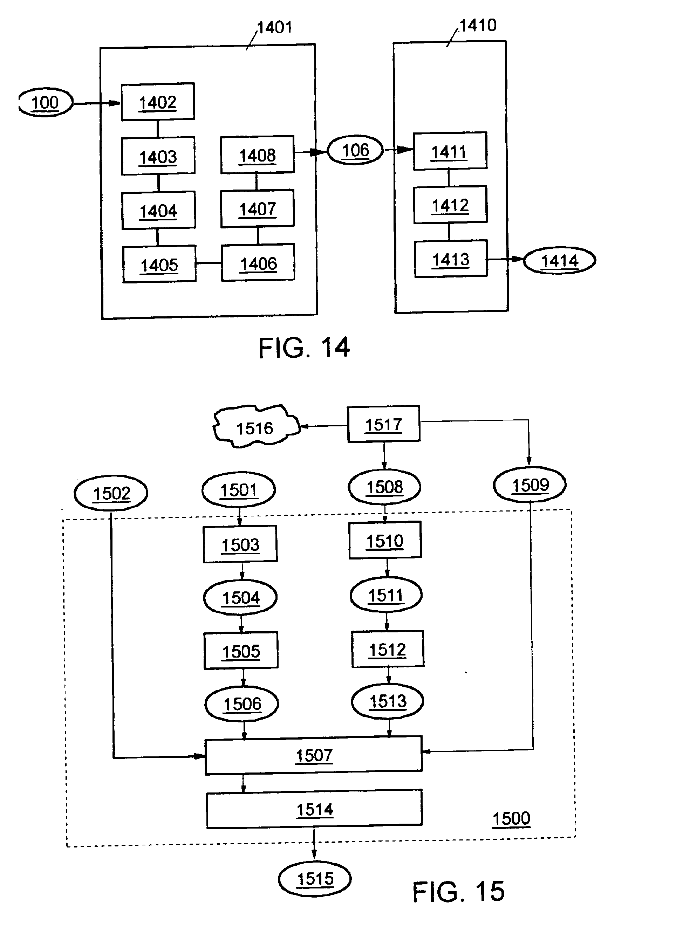

In a preferred embodiment of the present invention the procedure of generating an audio signature according to the present invention (steps 101 to 105 in Fig.1) is carried out in a signature generator 1401 as illustrated in Fig.14. In a preferred embodiment the signature generator 1401 as illustrated in Fig.14 comprises an input module 1402, through which the audio signals 100 are fed into or retrieved by the signature generator 1401. In a preferred embodiment analog audio material is digitized prior to step 101 by appropriate means.

In a preferred embodiment the signature generator 1401 as illustrated in Fig.14 further comprises a series expansion module 1403, wherein the series expansion of the audio signal 100 (step 101) is carried out. In step 101 the coefficients $\alpha_i$ of the series expansion of the audio signal 100 are calculated with respect to a complete set of elementary signals $\{\varphi_i\}$. Thereby the following formula is used, wherein the audio signal 100 is denominated *x,* and the index *i* denominates the number of elementary signals $\varphi_i$.

$$x = \sum_i \alpha_i \varphi_i$$

A set of elementary signals $\{\varphi_i\}$ is complete, if all signals x can be written as a linear combination of the elementary signals $\varphi_i$.

If a set of elementary signals $\{\varphi_i\}$ is complete there exist a dual set $\{\varphi'_i\}$ such that the coefficients $\alpha_i$ can be computed as the inner product of the signal *x* with the dual set $\{\varphi'_i\}$:

$$\alpha_i = \sum_n \varphi'_i[n]\, x[n]$$

wherein the index *i* identifies the elementary signal $\varphi_i$ and the index *n* runs through all data points of the audio signal *x.*

In cases where the elementary signals $\varphi_i$ are localised in time (like e.g. whenever the signal *x* is segmented into smaller blocks for processing or the elementary signals $\varphi_i$ are only defined for a finite time interval) a local series expansion is computed for each block of data or each support interval of the elementary signals $\varphi_i$. These local series expansions are accumulated in a vector *A* of series expansions where each element of *A* comprises the coefficients $\alpha_i$ of the series expansion for a single window.

Those skilled in the art will not fail to realize that a great variety of sets of complete elementary signals exist that can be used to calculate a series expansion. These include but are by no means restricted to the sets of elementary signals used in Fourier, wavelet, or bilinear transformations.

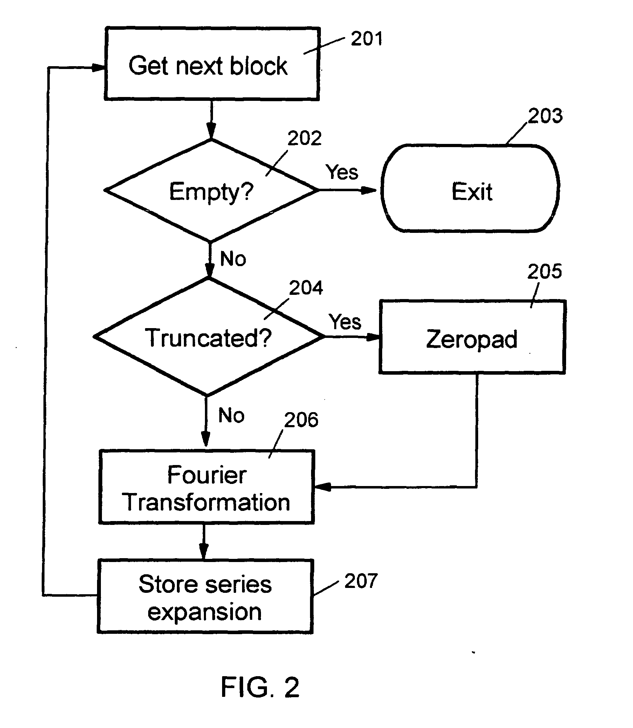

In the preferred embodiment of the present invention the monophonic input audio signal 100 is segmented into blocks of preferably one second duration and for each block a discrete Fourier transformation is computed (step 101 in Fig.1). Fig.2 illustrates this process according to an embodiment of the present invention. Each block of the audio signal 100 is retrieved in step 201 and it is checked whether all audio data is processed (e.g. whether the block includes audio data or not) in step 202. If all audio data is processed the process exits in step 203 (and continues with step 102 in Fig. 1), otherwise it continues with step 204, wherein it is checked whether or not the block is completely filled with audio data. If the block is a truncated block, the empty space is filled with the data content '0' in step 205 and the process continues with step 206. If the block is not truncated, a Fourier transformation is carried out in step 206. The resulting coefficients $\alpha_i$ of the series expansion are assembled into the vector A and stored into a memory and/or directly forwarded in step 207 for use in step 102 as described below. The process returns to step 201 where the next block of the audio signal 100 is retrieved.

The discrete Fourier transformation as carried out in step 206 can be interpreted as a series expansion of the audio signal 100 with respect to the set of elementary signals $\{\varphi_i\}$:

$$\{\varphi_i\} = \exp(-2i\pi kn/N)$$

For a signal with N datapoints the coefficients $\alpha_i$ of the series expansion can be computed as:

$$\alpha_k = \sum_{n=0}^{N-1} x[n] \exp(-2 i \pi kn/N)$$

wherein the index $n$ runs through all datapoints und the index $k$ identifies the elementary signal $\varphi_i$.

In a preferred embodiment the signature generator 1401 as illustrated in Fig.14 further comprises a spectrum module 1404, wherein the calculation of a spectrum S is carried out (step 102 in Fig.1)

Preferably the energy spectrum S is calculated from the coefficients $\alpha_i$ of the series expansion as resulting from step 101. The energy spectrum S is defined as:

$$S_i = |\alpha_i|^2$$

In cases where the series expansion results in a vector A, a partial spectrum is computed for each element of this vector and the partial spectra are averaged to obtain the energy spectrum S.

In the present embodiment wherein a Fourier transformation is used to calculate the series expansion, the energy spectrum S generated in step 102 is usually known as power spectrum. In step 102 for each block of the audio input 100 the energy spectrum is calculated from the Fourier transformation and the spectra from all blocks are averaged.

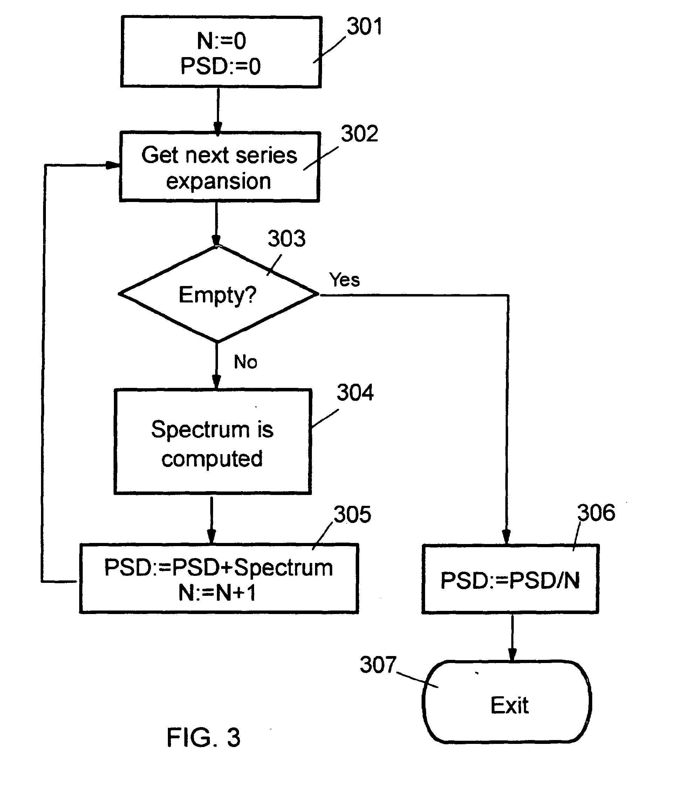

Fig.3 illustrates the process of step 102 according to an embodiment of the present invention. Thereby it is assumed that the results of step 101 have been previously stored (in step 207). In a first step 301 a counter $n$ and a power spectral density vector (PSD) are created and initialized (= set to '0'). In the next step 302 the coefficients $\alpha_i$ of the series expansion for a first block resulting from step 101 are retrieved. It is checked in step 303, whether the coefficients $\alpha_i$ of all local series expansions have been processed. If they are not yet completely processed the energy spectrum of that block is computed in step 304. Next this spectrum is added to the PSD vector and the counter $n$ is incremented by a value of '1' in step 305. The process continues with returning to step 302, retrieving the coefficients $\alpha_i$ of the series expansion of the next block. If all blocks have been processed, the process continues with step 306 subsequent to step 303. In step 306 the PSD vector (sum of all spectra) is devided by $n$ to produce an average energy spectrum. The process of generating the energy spectrum exits with step 307, wherein the spectrum is stored and/or forwarded for use in the peak selection step 103 as described below.

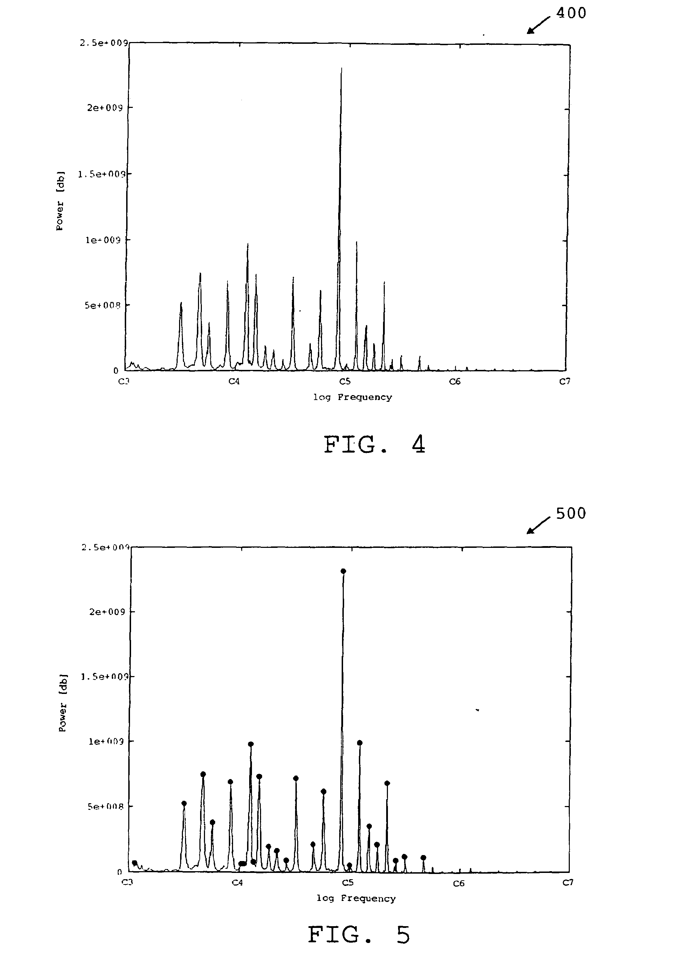

An example of a resulting energy spectrum 400 according to an embodiment of the present invention is shown in Fig. 4. The power of the audio signal 100 is plotted against a logarithmic frequency scale labelled using the standard musicological notation for frequencies with 'C4' corresponding to 261,63 Hz.

In a further embodiment of the present invention the signature generator 1401 additionally comprises a format check module (not shown in Fig.14), preferably connected between the input module 1402 and the series expansion module 1403, wherein it is determined, whether the audio signal 100 is already encoded as a series expansion. The format check module can be designed for carrying out any suitable method as known in the art, e.g. parsing of 'magic' strings in the header of the audio data 100. In cases, where the audio signal 100 is already encoded as a usable series expansion, it is than preferably directly fed into or retrieved by the spectrum module 1404 without undergoing a series expansion, e.g. by bypassing the series expansion module 1403.

In a further embodiment of the present invention the energy spectrum is calculated whenever appropriate by other methods like e.g. autoregressive spectral estimation, minimum variance spectral estimation, Prony's method, etc. Then the energy spectrum can be generated without carrying out a previous series expansion of the input data.

In a preferred embodiment the signature generator 1401 as illustrated in Fig.14 further comprises a peak selection module 1405, wherein the peak selection (step 103 in Fig.1) is carried out. In step 103 the $n$ most prominent local peaks are selected from the spectrum S as resulting from step 102. In the prefered embodiment of the present invention the twentyfive most prominent local peaks are selected from the energy spectrum 400. Fig.5 shows the marked energy spectrum 500 according to an embodiment of the present invention. The marked energy spectrum 500 corresponds to the energy spectrum 400 as shown in Fig.4, with the twentyfive largest peaks marked with dots.

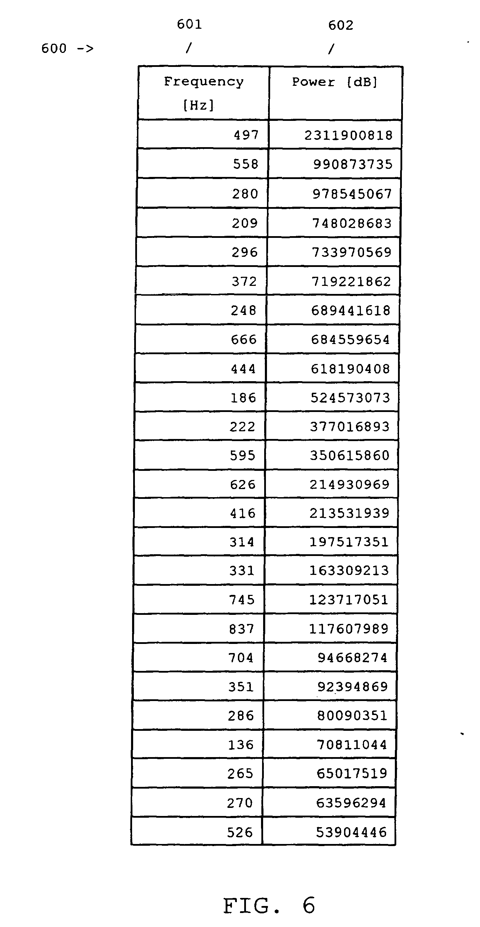

Furthermore a peak array is generated in step 103. Such a peak array (PA) 600 according to an embodiment of the present invention is shown in Fig.6. The peak array 600 results from the marked energy spectrum 500 and contains the location frequency 601 of the $n$ peaks in the first column and their magnitudes 602 in the second column. The peak array 600 is stored in a memory and/or forwarded directly to be used in peak quantization.

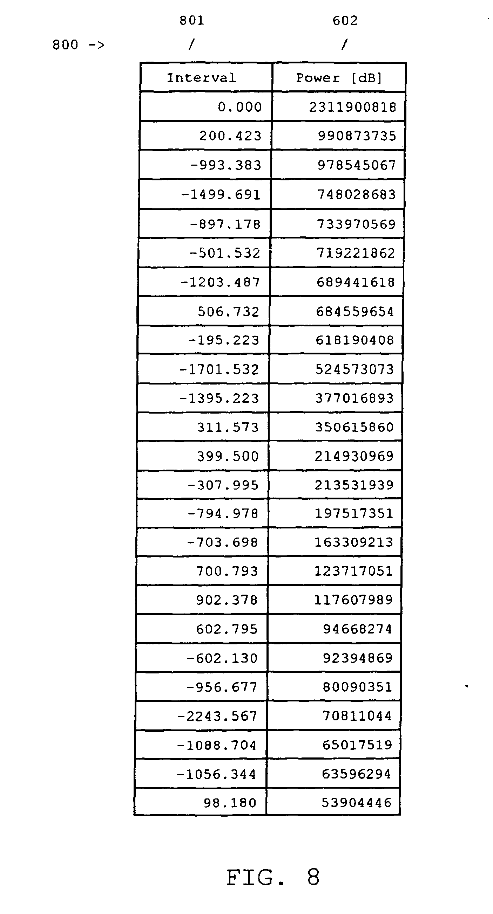

In a preferred embodiment the signature generator 1401 as illustrated in Fig.14 further comprises a peak quantization module 1406, wherein the peak quantization (step 104 in Fig.1) is carried out. In the first part of step 104 the frequency coordinates 601 of the $n$ peaks are transformed to an interval scale. Fig.8 shows a resulting interval array 800 according to an embodiment of the present invention. The interval array 800 contains the interval scale 801 of the *n* peaks in the first column and their magnitudes 602 in the second column. Thereby the intervals are expressed in cents (an octave is divided into twelvehundred cents). For carrying out the transformation the following general formula is used:

$$f' = a \; (\log_{base} \; (f) \; - \; \log_{base} \; (f_{max}))$$

In the above formula *f'* denominates the result of the transformation, whereas the frequencies are named *f*. Any logarithmic scale may be used. The multiplicant *a* is introduced to obtain results in an appropriate user friendly numeric range.

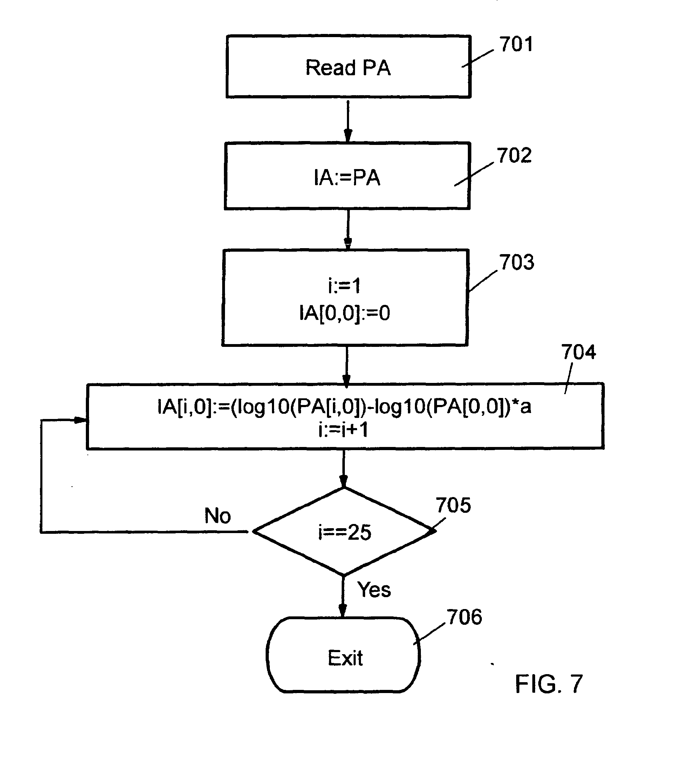

In the prefered embodiment the frequency column 601 of the peak array 600 is transformed into a musicological interval scale 801 with the frequency of the strongest partial of the energy spectrum as zero point. The interval array computation according to an embodiment of the present invention is described in Fig.7.

In a first step 701 the peak array 600 is retrieved. In step 702 an interval array (*IA*) 800 is created, e.g. by dublicating the peak array 600. Next a counter *i* is set to the value '1' and the first frequency entry of the *IA* array 800 is set to '0' in step 703.

In step 704 the frequencies 601 are transformed to intervalls 801 relative to the most prominent peak using the formula

$$IA[i,0] \; = \; a \; (\log_{10} \; (PA[i,0]) \; - \; \log_{10} \; (PA[0,0]))$$

wherein the intervall array *IA* and the peak array *PA* are indexed in the following way: the first index specifies the array's row (starting with row zero) and the second index specifies the array's column (starting with column zero).

The multiplicant *a* is the appropriate conversion factor to express the intervalls in cents. Thereby *a* is preferably set to 3986.31371392.

This process is repeated until the complete intervall scale 801 has been computed, for which reason the counter *i* is incremented by the value of '1' in step 704. If the complete intervall scale 801 has been computed (*i* = *n*), see step 705, the process of generating the intervall scale exits with step 706. The resulting intervall array 800 comprising the intervall scale 801 is stored and/or forwarded directly to the quantization part of step 104 as described in the following.

In the second part of step 104 the values of the interval scale 801 are quantized by rounding them to the nearest value of an appropriate scale. E.g. for classical european music a well-tempered scale is the most natural choice. Those skilled in the art will not fail to realize that depending on the type and cultural background of the content to be described a variety of different scale functions, including identity, may be used.

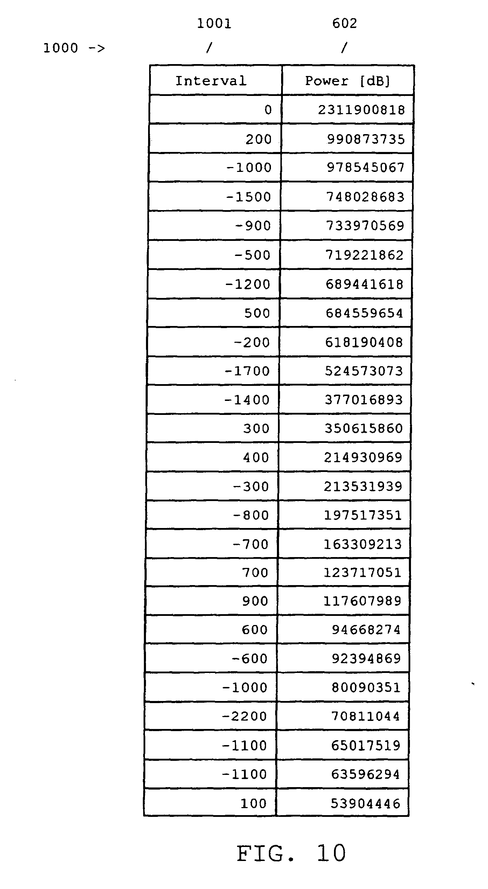

A quantized interval array according to an embodiment of the present invention as derived from step 104 is shown in Fig.10. The quantized interval array 1000 contains the quantized interval scale 1001 of the *n* peaks in the first column and their magnitudes 602 in the second column.

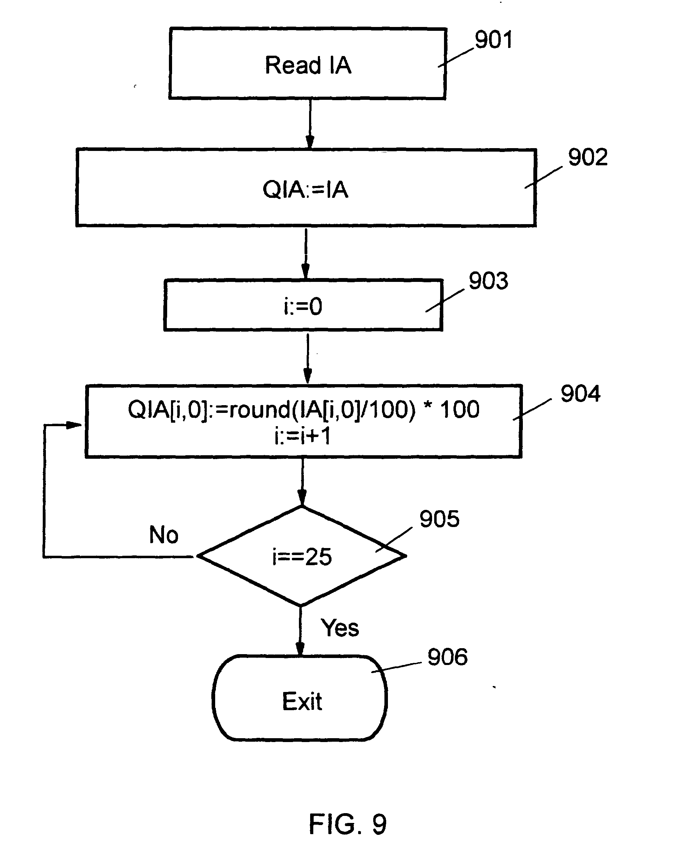

The procedure of quantization according to an embodiment of the present invention is shown in Fig.9. In a first step 901 the interval array 800 as generated during the first part of step 104 is retrieved. In the following step 902 a quantized interval array (*QIA*) is created, e.g. by dublicating the interval array 800. Next a counter *i* is initialized in step 903. In step 904 the quantized interval scale 1001 is calculated by

$$QIA[i,0] \; = \; round \; (IA[i,0]/100) \; *100$$

wherein the quantized intervall array *QIA* is indexed in the following way: the first index specifies the array's row (starting with row zero) and the second index specifies the array's column (starting with column zero). The counter *i* is incremented by the value of '1'.

This process is repeated until the complete quantized interval scale 1001 has been computed (*i* = *n*), see step 905, in which case the process of generating the quantized intervall array exits with step 906 and the quantized intervall array is stored and/or forwarded for use in the peak folding step 105 as described below.

In a preferred embodiment the signature generator 1401 as illustrated in Fig.14 further comprises a peak folding module 1407, wherein the peak folding (step 105 in Fig.1) is carried out. In step 105 an equivalence transformation is applied to the quantized interval scale 1001 of the peaks and the power values 602 for all equivalent frequency values are added at the location of the representative element creating cumulated power values. An example for such an equivalence relationship is the octave relationship (frequency doubling) between frequencies. It should be noted that amongst a variety of other equivalence relations the identity relation which maps each frequency onto itself may be used as well. The resulting signature 106 which is used for unambiguously characterizing the input audio data 100 is the vector of cumulated power values for all representative elements sorted in an arbitrary, but fixed way, e.g. in increasing coordinates of the representative elements and normalized to a sum of '1'.

In the described embodiment the power values 602 of all intervals that are an octave apart is added and the resulting cumulated power value is assigned to the smallest equivalent interval above the strongest partial of the energy spectrum (the zero point of the interval scale 1001).

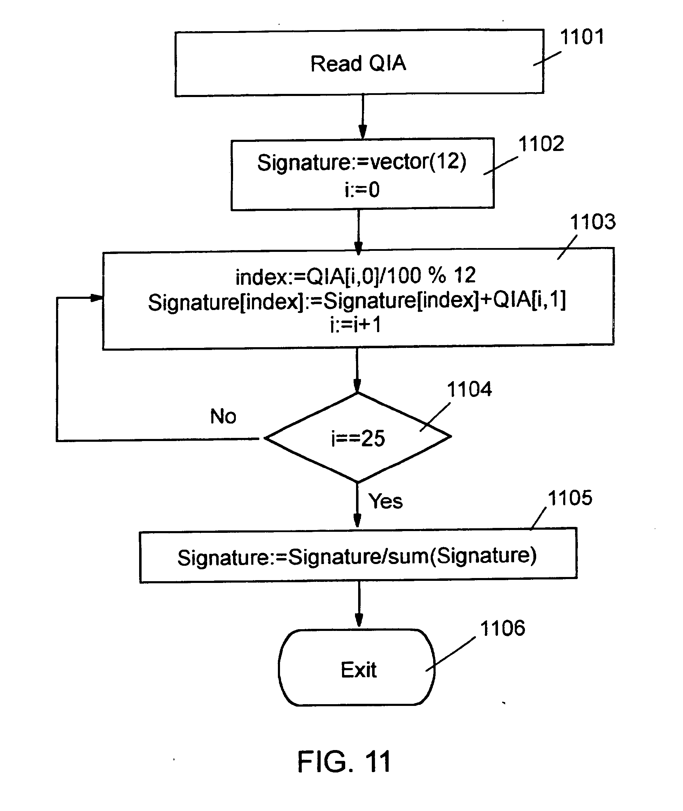

The procedure of peak folding according to an embodiment of the present invention is shown in Fig. 11. In a first step 1101 the quantized interval array 1000 is retrieved. In the following step 1102 a signature vector comprising twelve elements (if using a well tempered scale) is created and a counter *i* corresponding to the rows of the quantized interval array 1000 is initialized. In the next step 1103 the representative element ('index') for an octave equivalence relation is calculated by

$$index = QIA[i,0]/100 \bmod 12$$

and the power value (*QIA*[*i*,1]) is added to the signature value of the representative element

$$sig[index] = sig[index] + QIA[i,1]$$

and the counter *i* is incremented by the value of '1'. This process is repeated until the complete signature has been computed (*i* = *n*), see step 1104. Next the process continues with step 1105 wherein the normalization of the signature takes place. Therein the signature is normalized to a sum of '1'.

$$sig = sig/\mathtt{sum}(sig)$$

Subsequently the process exits with step 1106 at which time a normalized signature vector is generated. This signature vector is the audio signature 106. In a preferred embodiment the signature generator 1401 as illustrated in Fig.14 further comprises an output module 1408, through which the generated audio signature 106 is output.

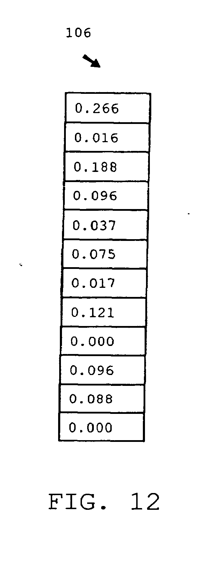

Fig. 12 shows the resulting audio signature vector 106 comprising *n*=12 elements according to an embodiment of the invention.

With the procedure illustrated in Fig.1 a characteristic audio signature 106 of audio signal 100 is generated. In order to determine whether two input audio signals are identical, the audio signature 106 for each audio signal 100 are computed as described above and compared with each other.

Two audio signatures 106 can be compared using any method appropriate for the comparison of vectors. A decision rule with a separation value Δ depending on the chosen method is used to distinguish identical from non-identical audio data.

In a preferred embodiment of the invention the method used to compare two signatures is a variant of the Kolomogorov-Smirnov statistic and computes the maximal distance between the two cumulated signatures (*Cum1, Cum2*). Signatures where the maximal distance is larger than the separation value Δ are judged to be different. This separation value Δ has to be determined empirically and may be set manually or automatically as parameter of a signature analyzer.

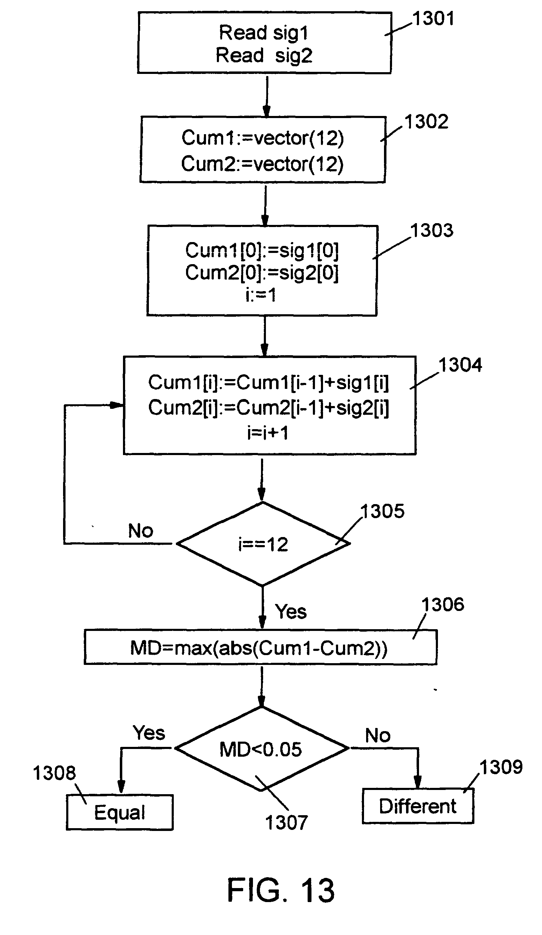

In an preferred embodiment of the present invention the analysation of audio signatures 106 in order to determine, whether audio data, e.g two audio files, are identical is carried out in a signature analyzer 1410 as illustrated in Fig. 14. In a preferred embodiment the signature analyzer 1410 comprises an input module 1411, through which audio signatures 106 are fed into or retrieved by the signature analyzer 1410 and a computing and evaluating module 1412, wherein the distance computing and evaluating (steps 1301-1309 in Fig. 13) is carried out.

The procedure of calculating the distance between the two signatures according to an embodiment of the present invention is shown in Fig. 13. In a first step 1301 the two audio signatures 106 to be compared are retrieved. In the following these signatures are denominated *sig1* and *sig2*.

In the following step 1302 the vectors (*cum1, cum2*) of the cumulated signatures are created. Thereby the length of the cumulated signatures (*cum1, cum2*) equals the length of the signatures *(sigl, sig2)*.

In the following step 1303 the first element of each of the cumulated signature vectors (*cum1, cum2*) is set to the first element of the according signature (*sig1*[0], *sig2*[0]), and a counter *i* representing the number of elements of the vectors (*cum1, cum2*) is set to the value '1'.

In the next step 1304 the cumulation signature vectors (*cum1, cum2*) are calculated by

$$\texttt{cum1[i] = cum1[i-1] + sig1[i]}$$

$$\texttt{cum2[i] = cum2[i-1] + sig2[i]}$$

and the counter *i* is incremented by the value '1'. This process is repeated until all elements of the cumulated vectors (*i*=12) have been completely processed, see step 1305.

Next the process continues with step 1306 wherein the maximal distance (*MD*) between the cumulated vectors (*cum1, cum2*) is computed.

$$\texttt{MD=max(abs(\textit{cum1-cum2}))}$$

The process continues with step 1307, wherein the maximal distance *MD* is used to compare the two audio signals 100. In the present embodiment the maximal distance *MD* is compared with the separation value Δ, e.g. 0.05, in order to determine, whether the two audio signals 100 are equal (the analyzing process ends with step 1308) or different (the process of ends with step 1309). Depending on whether the two audio signals 100 are equal or not, further procedures may be employed subsequent to step 1308 and/or step 1309 respectively (not shown in Fig.13). E.g. a report showing the result of the signature analysation may be generated and output, e.g. to an external device, like a monitor or printer, stored in a report file and/or transfered to a database. In a preferred embodiment the signature analyzer 1410 as illustrated in Fig.14 further comprises an output module 1413, through which the result 1414 of the signature analysation is output.

It will be understood and appreciated by those skilled in the art that the inventive concepts set forth in the embodiments described in this application and pertaining to the provision of detecting equal audio data, like audio recordings, may be embodied in a variety of system contexts.

For example, the above described procedure according to the present invention may be used in a system to compare a series of audio files against a set of reference audios in order to find recordings in the set of audios under proof that are part of the set of reference audios. An example of such an application is a system that automatically scans a computer network, e.g. the internet, for audio files, and compares them against a set of audios of e.g. a specific recording company, and find identical audio data according to the method of the present invention, in order to find copyright infringements.

The structure of such a system 1500 according to an embodiment of the present invention is shown in Fig. 15.

The input of the reference information comprises the reference audio file 1501 and descriptive information, the reference metadata 1502. Sources of this information can be e.g. physical recordings like compact disks or master tapes, or computer systems that store the information. The metadata 1502 is an identifier of the audio file, e.g. a catalogue number. Optionally the metadata 1502 includes other identifying information like title, artist, etc.

A format converter 1503 transforms the original reference audio file 1501 into a formatted reference audio file 1504 which is in a format that is supported by the signature generator 1505 and appropriate for the signature comparison later in the process. If the input format already fulfills these requirements, the conversion can be omitted or reduced to an identity transformation.

The signature generator 1505 (preferably an implementation of the signature generator 1401 as described above carrying out the steps 101 to 105 of this invention) uses the reference audio file 1504 as input file and generates an audio signature 1506 as specified in the above description.

This signature 1506 of reference audio is stored in a database (signature database) 1507 together with the reference metadata 1502.

The input of the information under proof comprises the audio file 1508 under proof and decriptive information (the metadata 1509 of the audio file under proof). Sources of this information can be physical recordings like CDs, files on computer systems or files that result from a (preferably automatic) scanning of storage systems like computer networks 1516 (e.g. the Internet) by an according scanning device 1517. The metadata 1509 is a characteric identifier of the audio file, typically the source address (location) of the audio file (e.g. an Internet URL). Additional information might be included if available.

A format converter 1510 transforms the audio file 1508 under proof into a formatted audio file 1511 which is in a format that is supported by the signature generator 1512 and appropriate for the signature comparison later in the process. Again, if the the input format already fulfills these requirements the conversion can be omitted or reduced to an identity transformation.

The signature generator 1512 works preferably according to the procedure described above and can be physically identical with the signature generator 1505. The signature generator 1512 uses the formatted audio file 1511 under proof as input file and generates an audio signature 1513 as specified in this invention.

This audio signature 1513 of the audio 1508 under proof is stored in the database (signature database) 1507 together with the reference metadata 1502.

In a prefered embodiment, after filling the signature database 1507 with the sets of signatures 1506 of reference audio and signatures 1513 of audio under proof, the report generator 1514 scans the signature database 1507 and generates a report 1515. The report generator 1514 preferably comprises an implementation of the signature analyzer 1410 as described above. The report 1515 preferably comprises a list of all reference audio files 1501 and audio files 1508 under proof that have the same signature. Preferably the metadata 1502, 1509 for each listed audio file 1501, 1508 are included in the report 1515.

A system as described above may take all audios of an audio owning company (e.g. record company) as reference input. Furthermore it may carry out an Internet scanning process (e.g. by a network scanner) to collect audio files 1508 to be examend and then generate a report 1515 of all files found on the Internet that have an identical signature than an reference audio. The report 1515 may than be used to check the Internet files 1508 for copyright infringement. This whole process is preferably carried out automatically.

A similar system can be used to establish a service that takes the audios of several audio owning companies as references, scan the Internet and generates reports for each company to check copyright infringements.

In the above description the invention has been described with regard to digital audio signals. However, the present invention is by no means restricted to audio signals. Other digital data may be used as well.

The present invention can be realized in hardware, software, or a combination of hardware and software. The signature generator 1401 and/or the signature analyzer 1410 as well as the modules used in the system 1500 for comparing a series of audio files against a set of reference audios, can be realized in a centralized fashion in one computer system, or in a distributed fashion where different elements are spread across several interconnected computer systems. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods. Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

**Claims**

1.  Method for generating a characteristic identifier for digital data, comprising the steps of:

> generating an energy spectrum (400) from the digital data,
> selecting a limited number of the most prominent peaks (602) from the energy spectrum (400) and the frequency coordinates (601) belonging to them,
> transforming the frequency coordinates (601) into an interval scale and quantizing the frequency coordinates (601),
> applying an equivalence transformation to the scaled information, whereby the peak values for all equivalent frequency coordinates are summed in one equivalence class, and whereby a constant number of equivalence classes is used, and
> generating the identifier (106) comprising the results of the equivalence transformation.

**2.** The method of claim 1, whereby the frequency coordinates (601) are transformed using the frequency of the strongest partial of the energy spectrum (400) as zero point.

**3.** The method of claim 1, whereby the digital data is a digital audio signal and the frequency coordinates (601) are transformed using a well tempered interval scale.

**4.** The method of claim 1, whereby the frequency coordinates (601) are quantized by rounding them to the nearest value of the interval scale.

**5.** The method of claim 1, comprising the further previous steps:

determining whether the digital data is represented as a series expansion with respect to a complete set of elementary signals, and
if the digital data is not represented as such a series expansion, carrying out such a series expansion.

**6.** The method of claim 1, whereby the digital data is represented as a series expansion with respect to a complete set of elementary signals, and the energy spectrum (400) is generated using information from the series expansion.

**7.** The method of claim 1, comprising the further step of storing the resulting identifier (106) into a database (1507).

**8.** Method for detection of identical digital data, comprising the steps of:

carrying out the steps of claim 1 for at least two digital data (1501, 1508),
determining the distance between the resulting identifiers (1506, 1513),
depending on the result of the determination deciding whether or not the digital data (1501, 1508) are identical.

**9.** The method of claim 8, comprising the further step of generating a report (1515) which comprises the result of the decision.

**10.** System for generating a characteristic identifier for digital data, **characterized in that** it comprises an identifier generator (1401; 1505, 1512) which comprises
a data input module (1402),
a spectrum module (1404) connected to the data input module (1402), and adapted for generating an energy spectrum (400) from the digital data,
a peak selection module (1405) connected to the spectrum module (1404), and adapted for selecting a limited number of the most prominent peaks (602) from the energy spectrum (400) and the frequency coordinates (601) belonging to them,
a peak quantization module (1406) connected to the peak selection module (1405), and adapted for transforming the frequency coordinates (601) into an interval scale, and further adapted for quantizing the frequency coordinates (601),
a peak folding module (1407) connected to the peak quantization module (1406), and adapted for applying an equivalence transformation to the scaled information, whereby the peak values for all equivalent frequency coordinates are summed in one equivalence class, and whereby a constant number of equivalence classes is used, and further adapted for generating the identifier (106) comprising the results of the equivalence transformation, and
a data output module (1408) connected to the peak folding module (1407).

**11.** The system of claim 10, **characterized in that** the digital data is a digital audio signal (100).

**12.** The system of claim 10, **characterized in that** it further comprises
a format check module connected to the data input module (1402), and adapted for determining whether the digital data is represented as a series expansion with respect to a complete set of elementary signals, and
a series expansion module (1403) connected to the format check module, and adapted for carrying out such a series expansion if the digital data is not represented as such a series expansion.

**13.** The system of claim 10, **characterized in that** the digital data is represented as a series expansion with respect to a complete set of elementary signals, and the spectrum module (1404) is adapted for generating the energy spectrum (400) using information from the series expansion.

**14.** System for detection of identical digital data, comprising the identifier generator (1401; 1505, 1512) of claim 10 and further comprising a identifier analyzer (1410; 1514) comprising
a data input module (1411),
a computing and evaluation module (1412) connected to the data input module (1411), and adapted for determining the distance between identifiers (106; 1506, 1513) of digital data (100; 1501, 1508), and further adapted for deciding whether or not the digital data (100; 1501, 1508) are identical, and
a data output module (1413) connected to the computing and evaluation module (1412).

**15.** The system of claim 14, further comprising a report generator (1514) connected to the identifier generator (1401; 1505, 1512), and adapted for generating a report (1515) which comprises the result of the decision.

**16.** The system of claim 14, further comprising a database (1507) connected to the identifier generator (1401; 1505, 1512).

**17.** Computer program product directly loadable into the internal memory of a computer, comprising software code portions for performing the steps of claim 1 when said product is run on a computer.

**18.** Computer system comprising an internal memory, wherein the computer program product of claim 17 is loaded, and an execution environment for executing the method of claim 1.

**19.** Computer program product directly loadable into the internal memory of a computer, comprising software code portions for performing the steps of claim 8 when said product is run on a computer.

**20.** Computer system comprising an internal memory, wherein the computer program product of claim 19 is loaded, and an execution environment for executing the method of claim 8.

**Patentansprüche**

**1.** Verfahren für das Erzeugen eines charakteristischen Bezeichners für digitale Daten, wobei das Verfahren folgende Schritte umfasst:

Erzeugen eines Energiespektrums (400) aus den digitalen Daten,
Auswählen einer begrenzten Anzahl der am stärksten aus dem Energiespektrum (400) herausragenden Spitzen (Peaks) (602) und der zugehörigen Frequenzkoordinaten (601),
Umwandeln der Frequenzkoordinaten (601) in eine Intervallskala und Quantisieren der Frequenzkoordinaten (601),
Anwenden einer Äquivalenzumwandlung auf die skalierten Daten, wobei die Spitzenwerte aller gleichwertigen Frequenzkoordinaten in einer Äquivalenzklasse zusammengefasst werden und wobei eine gleichbleibende Anzahl von Äquivalenzklassen verwendet wird, und
Erzeugen des Bezeichners (106), der die Ergebnisse der Äquivalenzumwandlung umfasst.

**2.** Verfahren nach Anspruch 1, wobei die Frequenzkoordinaten (601) umgewandelt werden, indem die Frequenz des stärksten Teilabschnitts des Energiespektrums (400) als Nullpunkt verwendet wird.

**3.** Verfahren nach Anspruch 1, wobei es sich bei den digitalen Daten um ein digitales Audiosignal handelt und die Frequenzkoordinaten (601) unter Verwendung einer wohltemperierten Intervallskala umgewandelt werden.

**4.** Verfahren nach Anspruch 1, wobei die Frequenzkoordinaten (601) quantisiert werden, indem sie auf den nächsten Wert der Intervallskala gerundet werden.

**5.** Verfahren nach Anspruch 1, das des Weiteren die folgenden Schritte umfasst:

Ermitteln, ob die digitalen Daten mit Bezug auf einen vollständigen Satz von Elementarsignalen als Reihenentwicklung dargestellt sind, und
wenn die digitalen Daten nicht als derartige Reihenentwicklung dargestellt sind, Durchführen einer derartigen Reihenentwicklung.

**6.** Verfahren nach Anspruch 1, wobei die digitalen Daten mit Bezug auf einen vollständigen Satz von Elementarsignalen als Reihenentwicklung dargestellt sind und das Energiespektrum (400) unter Verwendung von Daten aus der Reihenentwicklung erzeugt wird.

**7.** Verfahren nach Anspruch 1, das den weiteren Schritt des
Speicherns des resultierenden Bezeichners (106) in einer Datenbank (1507) umfasst.

**8.** Verfahren für die Erkennung von übereinstimmenden digitalen Daten, das die folgenden Schritte umfasst:

Durchführen der Schritte nach Anspruch 1 für mindestens zwei digitale Daten (1501, 1508),
Ermitteln des Abstands zwischen den resultierenden Bezeichnern (1506, 1513),
abhängig vom Ergebnis der Ermittlung Entscheiden, ob die digitalen Daten (1501, 1508) übereinstimmend sind.

**9.** Verfahren nach Anspruch 8, das den weiteren Schritt des
Erzeugens eines Berichts (1515) umfasst, welcher das Ergebnis der Entscheidung umfasst.

**10.** System für das Erzeugen eines charakteristischen Bezeichners für digitale Daten, **dadurch gekennzeichnet, dass** es eine Bezeichnererzeugungseinheit (1401; 1505, 1512) umfasst, welche Folgendes umfasst:

ein Dateneingabemodul (1402),
ein Spektrummodul (1404), das mit dem Dateneingabemodul (1402) verbunden und so gestaltet ist, dass es ein Energiespektrum (400) aus den digitalen Daten erzeugen kann,
ein Spitzenauswahlmodul (peak selection module)(1405), das mit dem Spektrummodul (1404) verbunden und so gestaltet ist, dass es eine begrenzte Anzahl der am stärksten aus dem Energiespektrum (400) herausragenden Spitzen (602) und der zugehörigen Frequenzkoordinaten (601) auswählt,
ein Spitzenquantisierungsmodul (1406), das mit dem Spitzenauswahlmodul (1405) verbunden und so gestaltet ist, dass es die Frequenzkoordinaten (601) in eine Intervallskala umwandelt, und das außerdem so gestaltet ist, dass es die Frequenzkoordinaten (601) quantisiert,
ein Spitzenfaltungsmodul (1407), das mit dem Spitzenquantisierungsmodul (1406) verbunden und so gestaltet ist, dass es eine Äquivalenzumwandlung auf die skalierten Daten anwendet, wobei die Spitzenwerte aller gleichwertigen Frequenzkoordinaten in einer Äquivalenzklasse zusammengefasst werden und wobei eine gleichbleibende Anzahl von Äquivalenzklassen verwendet wird, und das des Weiteren so gestaltet ist, dass es den Bezeichner (106), der die Ergebnisse der Äquivalenzumwandlung umfasst, erzeugt, und
ein Datenausgabemodul (1408), das mit dem Spitzenfaltungsmodul (1407) verbunden ist.

**11.** System nach Anspruch 10, **dadurch gekennzeichnet, dass** es sich bei den digitalen Daten um ein digitales Audiosignal (100) handelt.

**12.** System nach Anspruch 10, **dadurch gekennzeichnet, dass** es des Weiteren Folgendes umfasst:

ein Formatprüfungsmodul, das mit dem Dateneingabemodul (1402) verbunden und so gestaltet ist, dass es ermitteln kann, ob die digitalen Daten mit Bezug auf einen vollständigen Satz von Elementarsignalen als Reihenentwicklung dargestellt sind, und
ein Reihenentwicklungsmodul (1403), das mit dem Formatprüfungsmodul verbunden und so gestaltet ist, dass es eine derartige Reihenentwicklung durchführen kann, wenn die digitalen Daten nicht als derartige Reihenentwicklung dargestellt sind.

**13.** System nach Anspruch 10, **dadurch gekennzeichnet, dass** die digitalen Daten mit Bezug auf einen vollständigen Satz von Elementarsignalen als Reihenentwicklung dargestellt sind und dass das Spektrummodul (1404) so gestaltet ist, dass es das Energiespektrum (400) unter Verwendung von Daten aus der Reihenentwicklung erzeugt.

**14.** System für das Erkennen von übereinstimmenden digitalen Daten, wobei das System die Bezeichnererzeugungseinheit (1401; 1505, 1512) nach Anspruch 10 und des Weiteren eine Bezeichneranalyseeinheit (1410; 1514) umfasst, welche
ein Dateneingabemodul (1411) umfasst,
ein Berechnungs- und Auswertungsmodul (1412), das mit dem Dateneingabemodul (1411) verbunden und so gestaltet ist, dass es den Abstand zwischen Bezeichnern (106; 1506, 1513) von digitalen Daten (100; 1501, 1508) ermitteln kann, und das weiterhin so gestaltet ist, dass es entscheiden kann, ob die digitalen Daten (100; 1501, 1508) übereinstimmend sind, und
ein Datenausgabemodul (1413), das mit dem Berechnungs- und Auswertungsmodul (1412) verbunden ist.

**15.** System nach Anspruch 14, das des Weiteren eine Berichterzeugungseinheit (1514) umfasst, die mit der Bezeichnererzeugungseinheit (1401; 1505; 1512) verbunden und so gestaltet ist, dass sie einen Bericht (1515) erzeugt, der das Ergebnis der Entscheidung umfasst.

**16.** System nach Anspruch 14, das weiter eine Datenbank (1507) umfasst, die mit der Bezeichnererzeugungseinheit (1401; 1505, 1512) verbunden ist.

**17.** Computerprogrammprodukt, das direkt in den internen Speicher eines Computers ladbar ist und Softwarecodeteile umfasst, um die Schritte nach Anspruch 1 durchzuführen, wenn das Produkt auf einem Computer ausgeführt wird.

**18.** Computersystem, das einen internen Speicher, in den das Computerprogrammprodukt nach Anspruch 17 geladen wird, und eine Ausführungsumgebung für das Ausführen des Verfahrens nach Anspruch 1 umfasst.

**19.** Computerprogrammprodukt, das direkt in den internen Speicher eines Computers ladbar ist und Softwarecodeteile umfasst, um die Schritte nach Anspruch 8 durchzuführen, wenn das Produkt auf einem Computer ausgeführt wird.

**20.** Computersystem, das einen internen Speicher, in den das Computerprogrammprodukt nach Anspruch 19 geladen wird, und eine Ausführungsumgebung für das Ausführen des Verfahrens nach Anspruch 8 umfasst.

**Revendications**

**1.** Procédé pour générer un identificateur de caractéristique pour des données numériques, comprenant les étapes consistant à :

générer un spectre d'énergie (400) à partir des données numériques,
sélectionner un nombre limité des pics les plus proéminents (602) à partir du spectre d'énergie (400) et des coordonnées de fréquence (601) leur appartenant,
transformer les coordonnées de fréquence (601) en une échelle d'intervalle et quantifier les coordonnées de fréquence (601),
appliquer une transformation d'équivalence à l'information mise à l'échelle, de manière que les valeurs de pic pour la totalité des coordonnées de fréquence équivalentes soient additionnées en une classe d'équivalence, et de manière qu'un nombre constant de classes d'équivalence soit utilisé, et
générer l'identificateur (106) comprenant les résultats de la transformation d'équivalence.

**2.** Procédé selon la revendication 1, dans lequel les coordonnées de fréquence (601) sont transformées en utilisant comme point zéro la fréquence de la partie la plus forte du spectre d'énergie (400).

**3.** Procédé selon la revendication 1, dans lequel les données numériques sont un signal audio numérique, et les coordonnées de fréquence (601) sont transformées en utilisant une échelle d'intervalle bien tempérée.

**4.** Procédé selon la revendication 1, dans lequel les coordonnées de fréquence (601) sont quantifiées en les arrondissant à la valeur la plus proche de l'échelle d'intervalle.

**5.** Procédé selon la revendication 1, comprenant les autres étapes antérieures consistant à :

déterminer si les données numériques sont représentées sous forme d'un développement en série par rapport à un jeu complet de signaux élémentaires, et
si les données numériques ne sont pas représentées en tant qu'un tel développement en série, effectuer un tel développement en série.

**6.** Procédé selon la revendication 1, dans lequel les données numériques sont représentées sous forme d'un développement en série par rapport à un jeu complet de signaux élémentaires, et le spectre d'énergie (400) est généré en utilisant une information provenant du développement en série.

7. Procédé selon la revendication 1, comprenant l'étape supplémentaire consistant à :

   stocker l'identificateur (106) résultant dans une base de données (1507).

8. Procédé de détection de données numériques identiques, comprenant les étapes consistant à :

   effectuer les étapes de la revendication 1 pour au moins deux données numériques (1501, 1508),
   déterminer la distance entre les identificateurs résultants (1506, 1513),
   selon le résultat de la détermination, décider si les données numériques (1501, 1508) sont ou non identiques.

9. Procédé selon la revendication 8, comprenant l'étape supplémentaire consistant à :

   générer un rapport (1515) comprenant le résultat de la décision.

10. Système pour générer un identificateur de caractéristique pour des données numériques, **caractérisé en ce qu'**il comprend un générateur d'identificateur (1401 ; 1505, 1512) comprenant :

    un module d'entrée de données (1402),
    un module de spectre (1404), connecté au module d'entrée de données (1402) et adapté pour générer un spectre d'énergie (400) à partir des données numériques,
    un module de sélection de pic (1405), connecté au module de spectre (1404) et adapté pour sélectionner un nombre limité de pics les plus proéminents (602), à partir du spectre d'énergie (400) et des coordonnées de fréquence (601) leur appartenant,
    un module de quantification de pic (1406), connecté au module de sélection de pic (1405), et adapté pour transformer les coordonnées de fréquence (601) en une échelle d'intervalle, et en outre adapté pour quantifier les coordonnées de fréquence (601),
    un module de déploiement de pic (1407), connecté au module de quantification de pic (1406), et adapté pour appliquer une transformation d'équivalence à l'information mise en échelle, de manière que les valeurs de pic pour la totalité des coordonnées de fréquence équivalente soient additionnées en une classe d'équivalence, et de manière qu'un nombre constant de classes d'équivalence soit utilisé, et adapté en outre pour générer l'identificateur (106) comprenant les résultats de la transformation d'équivalence, et
    un module de sortie de données (1408), connecté au module de déploiement de pic (1407).

11. Système selon la revendication 10, **caractérisé en ce que** les données numériques sont un signal audio numérique (100).

12. Système selon la revendication 10, **caractérisé en ce qu'**il comprend en outre :

    un module de contrôle de format, connecté au module d'entrée de données (1402), et adapté pour déterminer si les données numériques sont représentées sous forme d'un développement en série par rapport à un jeu complet de signaux élémentaires, et
    un module de développement en série (1403), connecté au module de contrôle de format, et adapté pour effectuer un tel développement en série si les données numériques ne sont pas représentées en tant qu'un tel développement en série.

13. Système selon la revendication 10, **caractérisé en ce que** les données numériques sont représentées sous forme d'un développement en série par rapport à un jeu complet de signaux élémentaires, et le module de spectre (1404) est adapté pour générer le spectre d'énergie (400) en utilisant une information provenant du développement en série.

14. Système de détection de données numériques identiques, comprenant le générateur d'identificateur (1401 ; 1505, 1512) de la revendication 10 et comprenant en outre un analyseur d'identificateur (1410 ; 1514) comprenant :

    un module d'entrée de données (1411),
    un module de calcul et d'évaluation (1412), connecté au module d'entrée de données (1411), et adapté pour déterminer la distance entre des identificateurs (106 ; 1506, 1513) des données numériques (100 ; 1501, 1508), et en outre adapté pour décider si les données numériques (100 ; 1501, 1508) sont ou non identiques ; et
    un module de sortie de données (1413), connecté au module de calcul et d'évaluation (1412).

**15.** Système selon la revendication 14, comprenant en outre un générateur de rapport (1514) connecté au générateur d'identificateur (1401 ; 1505, 1512), et adapté pour générer un rapport (1515) comprenant le résultat de la décision.

**16.** Système selon la revendication 14, comprenant en outre une base de données (1507) connectée au générateur d'identificateur (1401 ; 1505, 1512).

**17.** Produit de programme informatique, directement chargeable dans la mémoire interne d'un ordinateur, comprenant des parties de code logiciel pour accomplir les étapes de la revendication 1, lorsque ledit produit fonctionne sur un ordinateur.

**18.** Système informatique comprenant une mémoire interne, dans lequel le produit de programme informatique de la revendication 17 est chargé, et un environnement d'exécution pour mettre en oeuvre le procédé de la revendication 1.

**19.** Produit de programme informatique, directement chargeable dans la mémoire interne d'un ordinateur, comprenant des parties de code logiciel pour accomplir les étapes de la revendication 8, lorsque ledit produit fonctionne sur un ordinateur.

**20.** Système informatique, comprenant une mémoire interne, dans laquelle le produit de programme informatique de la revendication 19 est chargé, et un environnement d'exécution, pour mettre en oeuvre le procédé selon la revendication 8.

```
┌─────────────────────────────┐
│      Series Expansion       │── 101
│        (optional)           │
└─────────────────────────────┘
               │
               ▼
┌─────────────────────────────┐
│      Energy Spectrum        │── 102
└─────────────────────────────┘
               │
               ▼
┌─────────────────────────────┐
│       Peak Selection        │── 103
└─────────────────────────────┘
               │
               ▼
┌─────────────────────────────┐
│     Peak Quantization       │── 104
└─────────────────────────────┘
               │
               ▼
┌─────────────────────────────┐
│        Peak Folding         │── 105
└─────────────────────────────┘
```

# FIG. 1

FIG. 2

N:=0
PSD:=0 ——301

Get next series expansion ——302

Empty? ——303

Yes

No

Spectrum is computed ——304

PSD:=PSD+Spectrum
N:=N+1 ——305

PSD:=PSD/N ——306

307—— Exit

FIG. 3

FIG. 4

FIG. 5

600 ->  601  602
        /     /

| Frequency [Hz] | Power [dB] |
|---|---|
| 497 | 2311900818 |
| 558 | 990873735 |
| 280 | 978545067 |
| 209 | 748028683 |
| 296 | 733970569 |
| 372 | 719221862 |
| 248 | 689441618 |
| 666 | 684559654 |
| 444 | 618190408 |
| 186 | 524573073 |
| 222 | 377016893 |
| 595 | 350615860 |
| 626 | 214930969 |
| 416 | 213531939 |
| 314 | 197517351 |
| 331 | 163309213 |
| 745 | 123717051 |
| 837 | 117607989 |
| 704 | 94668274 |
| 351 | 92394869 |
| 286 | 80090351 |
| 136 | 70811044 |
| 265 | 65017519 |
| 270 | 63596294 |
| 526 | 53904446 |

FIG. 6

Read PA — 701

IA:=PA — 702

i:=1
IA[0,0]:=0 — 703

IA[i,0]:=(log10(PA[i,0])-log10(PA[0,0])*a
i:=i+1 — 704

i==25 — 705

No

Yes

Exit — 706

FIG. 7

800 -> 

801

602

| Interval | Power [dB] |
|---:|---:|
| 0.000 | 2311900818 |
| 200.423 | 990873735 |
| -993.383 | 978545067 |
| -1499.691 | 748028683 |
| -897.178 | 733970569 |
| -501.532 | 719221862 |
| -1203.487 | 689441618 |
| 506.732 | 684559654 |
| -195.223 | 618190408 |
| -1701.532 | 524573073 |
| -1395.223 | 377016893 |
| 311.573 | 350615860 |
| 399.500 | 214930969 |
| -307.995 | 213531939 |
| -794.978 | 197517351 |
| -703.698 | 163309213 |
| 700.793 | 123717051 |
| 902.378 | 117607989 |
| 602.795 | 94668274 |
| -602.130 | 92394869 |
| -956.677 | 80090351 |
| -2243.567 | 70811044 |
| -1088.704 | 65017519 |
| -1056.344 | 63596294 |
| 98.180 | 53904446 |

FIG. 8

Read IA — 901

QIA:=IA — 902

i:=0 — 903

QIA[i,0]:=round(IA[i,0]/100) * 100
i:=i+1 — 904

No ← i==25 — 905

Yes

Exit — 906

FIG. 9

1000 ->     1001          602
            /             /

| Interval | Power [dB] |
|---------:|-----------:|
| 0 | 2311900818 |
| 200 | 990873735 |
| -1000 | 978545067 |
| -1500 | 748028683 |
| -900 | 733970569 |
| -500 | 719221862 |
| -1200 | 689441618 |
| 500 | 684559654 |
| -200 | 618190408 |
| -1700 | 524573073 |
| -1400 | 377016893 |
| 300 | 350615860 |
| 400 | 214930969 |
| -300 | 213531939 |
| -800 | 197517351 |
| -700 | 163309213 |
| 700 | 123717051 |
| 900 | 117607989 |
| 600 | 94668274 |
| -600 | 92394869 |
| -1000 | 80090351 |
| -2200 | 70811044 |
| -1100 | 65017519 |
| -1100 | 63596294 |
| 100 | 53904446 |

FIG. 10

```
┌─────────────────────────────────────────┐
│              Read QIA                    │  1101
└─────────────────────────────────────────┘
                    │
                    ▼
        ┌───────────────────────────┐
        │   Signature:=vector(12)   │  1102
        │           i:=0            │
        └───────────────────────────┘
                    │
                    ▼
┌─────────────────────────────────────────────────────┐
│         index:=QIA[i,0]/100 % 12                     │  1103
│  Signature[index]:=Signature[index]+QIA[i,1]         │
│                   i:=i+1                              │
└─────────────────────────────────────────────────────┘
     ▲              │
     │              ▼
     │         ◇─────────◇
     │ No     ╱           ╲  1104
     └───────◇   i==25    ◇
             ╲           ╱
              ◇─────────◇
                    │
                    │ Yes
                    ▼
┌─────────────────────────────────────────────────────┐
│     Signature:=Signature/sum(Signature)             │  1105
└─────────────────────────────────────────────────────┘
                    │
                    ▼
            ╭───────────────╮
            │     Exit      │  1106
            ╰───────────────╯
```

# FIG. 11

106

| |
|---|
| 0.266 |
| 0.016 |
| 0.188 |
| 0.096 |
| 0.037 |
| 0.075 |
| 0.017 |
| 0.121 |
| 0.000 |
| 0.096 |
| 0.088 |
| 0.000 |

FIG. 12

```
                    ┌─────────────────────┐
                    │    Read sig1        │ ─── 1301
                    │    Read  sig2       │
                    └─────────────────────┘
                              │
                              ▼
                    ┌─────────────────────┐
                    │  Cum1:=vector(12)   │ ─── 1302
                    │  Cum2:=vector(12)   │
                    └─────────────────────┘
                              │
                              ▼
                    ┌─────────────────────┐
                    │  Cum1[0]:=sig1[0]   │ ─── 1303
                    │  Cum2[0]:=sig2[0]   │
                    │       i:=1          │
                    └─────────────────────┘
                              │
                              ▼
                 ┌──────────────────────────┐
                 │ Cum1[i]:=Cum1[i-1]+sig1[i]│ ─── 1304
                 │ Cum2[i]:=Cum2[i-1]+sig2[i]│
                 │        i=i+1             │
                 └──────────────────────────┘
                              │
                              ▼
              No          ◇ i==12 ◇ ─── 1305
            ◄─────────────
                              │ Yes
                              ▼
              ┌─────────────────────────────────┐
              │  MD=max(abs(Cum1-Cum2))         │ ─── 1306
              └─────────────────────────────────┘
                              │
                              ▼
       Yes        ◇ MD<0.05 ◇       No
     ◄──────────                  ──────────►
  ┌─────────┐      1307         ┌────────────┐
  │  Equal  │                   │ Different  │ ─── 1309
  └─────────┘                   └────────────┘
   1308
```

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5918223 A
- EP 0482669 A2